**Europäisches Patentamt**

**European Patent Office**

**Office européen des brevets**

(19)

(11) Veröffentlichungsnummer : **0 312 501 B1**

(12) # EUROPÄISCHE PATENTSCHRIFT

(45) Veröffentlichungstag der Patentschrift :
**22.01.92 Patentblatt 92/04**

(51) Int. Cl.⁵ : **F01N 3/02,** C04B 38/06,
C04B 38/00, B01D 39/20

(21) Anmeldenummer : **88810701.8**

(22) Anmeldetag : **12.10.88**

(54) **Filter zur Reinigung der Abgase von Dieselmotoren.**

(30) Priorität : **15.10.87 CH 4051/87**

(43) Veröffentlichungstag der Anmeldung :
**19.04.89 Patentblatt 89/16**

(45) Bekanntmachung des Hinweises auf die
Patenterteilung :
**22.01.92 Patentblatt 92/04**

(84) Benannte Vertragsstaaten :
**AT BE CH DE ES FR GB GR IT LI LU NL SE**

(56) Entgegenhaltungen :
**EP-A- 0 050 340**
**EP-A- 0 126 847**
**EP-A- 0 216 729**
**EP-A- 0 223 959**

(56) Entgegenhaltungen :
**DE-A- 3 527 872**
**DE-U- 8 620 832**
**US-A- 3 963 504**
**US-A- 4 207 114**

(73) Patentinhaber : **ALUSUISSE-LONZA
SERVICES AG
Feldeggstrasse 4
CH-8034 Zürich (CH)**

(72) Erfinder : **Mizrah, Tiberiu
Hohlenbaumstrasse 90
CH-8200 Schaffhausen (CH)**
Erfinder : **Gauckler, Ludwig
Gemsgasse 11
CH-8200 Schaffhaussen (CH)**
Erfinder : **Gabathuler, Jean-Pierre
Tannenstrasse 3
CH-8200 Schaffhaussen (CH)**

**Beschreibung**

Die vorliegende Erfindung betrifft ein Filter zur Reinigung der Abgase von Dieselmotoren mit offenporiger Schaumkeramik, hergestellt durch Beschichtung eines ausbrennbaren, offenporigen Körpers mit Keramikpulversuspension, Ausbrennen des Trägermaterials bei Temperaturen von 100-500°C und anschliessende Sinterung bei erhöhten Temperaturen.

Die Russbestandteile der Abgase von Dieselmotoren können grundsätzlich auf zwei Wegen verringert werden: durch Optimierung der Gemischaufbereitung und des Verbrennungsablaufs im Motor und durch Einbau von Filtern in den Abgasstrom. Je nach Ausbildung des Filters werden üblicherweise Russabscheidungsgrade von 50 bis 90% erzielt.

Da das Dieselabgasrussfilter innerhalb kurzer Zeit des Gebrauchs bereits mit Russ verstopft wäre, muss letzterer periodisch verbrannt werden. Die Zeitspanne von einer Regenerierungsphase zur anderen wird als Regenerierungsintervall bezeichnet. Unter bestimmten Bedingungen regeneriert sich das Filter von selbst. Die Russablagerungen werden dabei bei Temperaturen zwischen 550 und 700°C verbrannt. Mit katalytisch beschichteten Filtern kann die Verbrennungstemperatur auf ca. 500°C herabgesetzt werden.

Aus der US-PS 4264346 ist es bekannt, für obgenannte Zwecke eine offenporige Schaumkeramik als filterwirksames Medium zu verwenden. Als offenporige Schaumkeramik wird dabei ein poröser Keramikkörper mit dreidimensionalem Netzwerk und zellularer Struktur, die eine Vielzahl von durchgehenden Hohlräumen enthält, verstanden. Der meist zylindrische oder aus mehreren Scheiben bestehende Keramikkörper wird derart in den Abgasstrom von Dieselmotoren gebracht, dass die Abgase denselben stirnseitig beaufschlagen und achsparallel oder zwangsgeführt durchströmen. Dabei ist die Russabscheidung im anfänglich durchströmten Teil des Filters am grössten und nimmt mit zunehmender Durchströmung schnell ab. Dies hat zur Folge, dass das Filter im zuerst angeströmten Bereich nach relativ kurzer Zeit seine Russablagerungsaufnahmekapazität erreicht hat und regeneriert werden muss, der restliche Bereich des Filters jedoch noch russaufnahmefähig ist, aber bereits ebenfalls dem Regenerierungsprozess unterworfen wird.

Obwohl die Russablagerungsaufnahmekapazität des Keramikfilters verbessert werden kann, ist dem Problem, die Verbrennungstemperatur des abgelagerten Russes herabzusetzen, um die Regenerierungsphase so früh als möglich einzuleiten, keine Beachtung geschenkt worden.

Die Erfinder haben sich daher die Aufgabe gestellt, bei Filtern zur Reinigung der Abgase von Dieselmotoren mit offenporiger Schaumkeramik die Verbrennungstemperatur zu erniedrigen.

Erfindungsgemäss wird die gestellte Aufgabe durch ein Filter gelöst, welches sich nach dem Wortlaut des Anspruchs 1 auszeichnet. Vorteilhafte Weiterbildungen des erfindungsgemässen Gegenstandes sind durch die Merkmale der Ansprüche 2 bis 10 gekennzeichnet.

Mit Hilfe des erfindungsgemässen Filters ist es gelungen, besonders niedrige Russverbrennungstemperaturen bei der Reinigung der Abgase von Dieselmotoren während der Regenerationsphase zu erzielen. Ohne Verwendung von katalytisch aktiven Substanzen bei der Herstellung der Schaumkeramik wurden Russverbrennungstemperaturen zwischen 400 und 550°C gemessen, wobei die niedrigsten Temperaturen bei Verwendung von hohlzylindrischen Schaumkeramikkörpern bei radialer Durchströmung des zu reinigenden Abgases von innen nach aussen gemessen wurden. Mit katalytisch wirksamen Substanzen konnten diese Temperaturen sogar bis auf 300 bis 400°C reduziert werden.

Die Porenzahlen der Körper variierten zwischen 30 und 80 je 2,54 cm linearer Länge. Die Körper bestanden aus Cordierit, Lithiumaluminiumsilikat oder Mullit oder teilweise auch Gemischen daraus. Auch die Verwendung von Siliziumkarbid oder eine sonstige keramische Zusammensetzung, die thermoschockbeständig und mechanisch resistent ist, war für die Herstellung des Keramikschaumes geeignet.

Es zeigte sich, das die keramische Zusammensetzungen keinen wesentlichen Einfluss auf die Russentzündungstemperaturen hatten. Erfindungswesentlich ist dagegen die Bereitstellung eines Porensystems mit einer inneren Oberfläche zwischen 1 $m^2/l$ und 10 $m^2/l$. Insbesondere wird diese Oberfläche dadurch erreicht, dass das das organische Trägermaterial vollflächig umhüllende, keramische Schlickermaterial beim Antrocknen und/oder während oder nach dem Ausbrennen des organischen Trägermaterials durch Spannungen Risse oder Poren bekommt, wodurch der endgültige, gesinterte Keramikschaum Stege mit Oeffnungen aufweist. Die Oeffnungen bilden den Zugang zu einem zweiten Oberflächensystem, sodass die gesamte Oberfläche des Porensystems gegenüber der Replikaoberfläche von nach dem Stand der Technik für Abgasreinigungszwecke der erfindungsgemässen Art eingesetztem Schaumkeramikkörper bei gleicher Stegkonfiguration erheblich vergrössert ist, mit der Folge, dass neben anderen physikalisch-chemisch im einzelnen noch nicht geklärten Phänomenen der Flammfortschritt während der Regeneration wesentlich rascher die erfindungsgemässe Schaumkeramik durchläuft.

Im Bereich der Oeffnungen ist die Oberfläche der Stege der Schaumkeramik nicht wie sonst nach dem Stand der Technik üblich glatt, sondern die Oeffnungsränder sind meist quer zu den Richtungen der Stegachsen aufgewölbt. Diese Aufwölbungen haben einerseits den Effekt, dass an sie bevorzugt Feststoffteilchen aus dem Abgasstrom anhaften und somit zu isolierten lokalen Verstopfungen des Keramikschaumsystems führen. Die Verstopfungen wirken als lokale "hotspots" und lösen die frühzeitige Entzündung der festgehaltenen Feststoffteilchen aus.

Das zweifache Oberflächensystem ermöglicht den vollständigen Abbrand der Feststoffteilchen, welche praktisch vollständig aus Russ sowie flüchtigen Kohlenwasserstoffen bestehen. Die nahezu volle Filterregenerierung wird bei Temperaturen ab ca. 400°C erhalten, wodurch eines der Hauptprobleme beim praktischen Betrieb von Filteranlagen zur Reinigung der Abgase von Dieselmotoren überwunden ist.

Bei Dieselmotoren von Personenkraftwagen, Lastwagen oder von stationären Anlagen konnten mit dem erfindungsgemässen Filter Filtrationswirkungsgrade von 30 bis 90% erreicht werden. Der Druckverlust als Differenz des Drucks vor und nach dem erfindungsgemässen Filter betrug während des Betriebes der Motoren 20 bis 300 mbar, bzw. 9 bis 60 mbar bei einer Luftmassenströmung — kalt, russfrei — entsprechend der Luftmassenströmung während des Motorbetriebs.

Die zwei unterschiedlichen Oberflächen haben ferner den grossen Vorteil, wenn sie beide mit katalytisch wirksamer Substanz beschichtet sind, dass eine Langzeitstabilität der katalytischen Wirkung eintritt. Diese liegt wesentlich höher als bei für den gleichen Zweck eingesetzte Keramik mit honeycomb-Struktur oder Metallwolle.

Solche katalytischen Beschichtungen sind an sich bekannt (US-PS 4455395 oder DE-PS 3407172) und werden beim erfindungsgemässen Filter zusätzlich zur Herabsetzung der Regenerationstemperatur eingesetzt. Dabei kann die katalytisch wirksame Schicht je nach Einsatzart sowohl direkt auf den Schaumkeramikkörper als auch einen vorgängig aufgetragenen Ueberzug — allgemein washcoat genannt — aufgetragen werden.

## Patentansprüche

1. Filter zur Reinigung der Abgase von Dieselmotoren mit offenporiger Schaumkeramik, hergestellt durch Beschichtung eines ausbrennbaren, offenporigen Körpers mit Keramikpulversuspension, Ausbrennen des Trägermaterials bei Temperaturen von 100 bis 500°C und anschliessende Sinterung bei erhöhten Temperaturen, dadurch gekennzeichnet, dass das Filter eine selbsttragende Keramikstruktur mit einer inneren Oberfläche des gesamten Porensystems von 1 m²/l bis 10 m²/l und eine offene Porosität von 55 bis 92% aufweist.

2. Filter nach Anspruch 1, dadurch gekennzeichnet, dass das Trägermaterial ein poröses, organisches Material, inbesondere in Form eines Schaumes, Vlieses oder Gewebes, ist.

3. Filter nach Anspruch 2, dadurch gekennzeichnet, dass das Trägermaterial ein Polyurethanschaum der Feinheit von nominal 30 bis 80 Poren je 2,54 cm linearer Länge ist.

4. Filter nach einem der Ansprüche 1 bis 3, dadurch gekennzeichnet, dass die Keramikpulversuspension Substanzen enthält oder durch die nachfolgende Temperaturbehandlung Substanzen bildet, die bei der Reinigung der Abgase die Regenerierung des Filters katalytisch fördern.

5. Filter nach einem der Ansprüche 1 bis 4, dadurch gekennzeichnet, dass es einen oder mehrere Schaumkeramikkörper in Form von ebenen Platten oder Vollzylindern, insbesondere mit kreisförmigem Querschnitt enthält, wobei bei Verwendung von mehreren Schaumkeramikkörpern die Durchströmung der Körper durch die zu reinigenden Abgase nacheinander und/oder gleichzeitig erfolgt.

6. Filter nach einem der Ansprüche 1 bis 4, dadurch gekennzeichnet, dass die Schaumkeramik als Hohlzylinder oder einseitig geschlossener Hohlzylinder ausgebildet ist und die zu reinigenden Abgase die Schaumkeramik im wesentlichen radial zur Zylinderachse durchströmen.

7. Filter nach Anspruch 5 oder 6, dadurch gekennzeichnet, dass die Länge der Durchströmung der Abgase durch ein Schaumkeramikelement zwischen 3 und 15 cm beträgt.

8. Filter nach einem der Ansprüche 1 bis 7, dadurch gekennzeichnet, dass das Gesamtvolumen der Schaumkeramik etwa dem Hubraum des Dieselaggregats, dessen Abgase gereinigt werden, entspricht.

9. Filter nach einem der Ansprüche 1 bis 8, dadurch gekennzeichnet, dass die zu reinigenden Abgase zuerst gröbere Poren und anschliessend feinere Poren der Schaumkeramik durchströmen, wobei ein Schaumkeramikelement gröbere und feinere Porenschichten aufweist oder mindestens 2 hintereinander geschaltete Schaumkeramikelemente mit unterschiedlicher Porengrösse verwendet werden.

10. Filter nach einem der Ansprüche 1 bis 9, dadurch gekennzeichnet, dass das gesamte Porensystem mit einer katalytisch wirksamen Substanz beschichtet ist.

## Claims

1. Filter for purifying the exhaust gases of diesel engines with open-cell foam ceramic, prepared by coating a combustible, open-cell body with ceramic powder suspension, combusting the support material at temperatures of 100 to 500°C and then sintering at elevated temperatures, characterised in that the filter

5      EP 0 312 501 B1      6

has a self-supporting ceramic structure with an inner surface for the total pore system of 1 m²/l to 10 m²/l and an open porosity of 55 to 92%.

2. Filter according to claim 1, characterised in that the support material is a porous organic material, in particular in the form of a foam, fleece or fabric.

3. Filter according to claim 2, characterised in that the support material is a polyurethane foam having fineness of nominally 30 to 80 pores for every 2.54 cm of linear length.

4. Filter according to one of claims 1 to 3, characterised in that the ceramic powder suspension contains substances or forms substances, which catalytically promote the regeneration of the filter in the purification of exhaust gases, as a result of the subsequent temperature treatment.

5. Filter according to one of claims 1 to 4, characterised in that it contains one or more foam ceramic bodies in the form of flat plates or solid cylinders, in particular with circular cross-section, wherein when using several foam ceramic bodies, the flow through the bodies takes place in succession and/or at the same time as a result of the exhaust gases to be purified.

6. Filter according to one of claims 1 to 4, characterised in that the foam ceramic is designed as a hollow cylinder or a hollow cylinder closed on one side and the exhaust gases to be purified flow through the foam ceramic essentially radially to the cylinder axis.

7. Filter according to claim 5 or 6, characterised in that the length of flow of the exhaust gases through a foam ceramic element is between 3 and 15 cm.

8. Filter according to one of claims 1 to 7, characterised in that the total volume of the foam ceramic corresponds approximately to the stroke volume of the diesel unit, the exhaust gases of which are purified.

9. Filter according to one of claims 1 to 8, characterised in that the exhaust gases to be purified initially flow through coarser pores and then through finer pores in the foam ceramic, wherein a foam ceramic element has coarser and finer pore layers, or at least 2 foam ceramic elements of different pore size connected one behind another are used.

10. Filter according to one of claims 1 to 9, characterised in that the total pore system is coated with a catalytically active substance.

## Revendications

1. Filtre destiné à l'épuration des gaz d'échappement de moteurs Diesel, à céramique cellulaire à pores ouverts, fabriqué par revêtement d'un corps combustible à pores ouverts à l'aide d'une suspension de poudre céramique, combustion du matériau support à des températures comprises entre 100 et 500°C et frittage subséquent à des températures élevées, caractérisé en ce que le filtre présente une structure céramique autoporteuse dotée d'un système de pores de surface interne totale comprise entre 1 m²/l et 10 m²/l et une porosité ouverte de 55 à 92%.

2. Filtre selon la revendication 1, caractérisé en ce que le matériau support est un matériau organique poreux, ayant notamment la forme d'une mousse, d'un non-tissé ou d'un tissu.

3. Filtre selon la revendication 2, caractérisé en ce que le matériau support est une mousse de polyuréthanne de finesse comprise nominalement entre 30 et 80 pores par 2,54 cm de longueur linéaire.

4. Filtre selon l'une des revendications 1 à 3, caractérisé en ce que la suspension de poudre céramique contient des substances ou forme à la suite du traitement thermique suivant des substances qui favorisent catalytiquement la régénération du filtre au cours de l'épuration des gaz d'échappement.

5. Filtre selon l'une des revendications 1 à 4, caractérisé en ce qu'il contient un ou plusieurs corps en céramique cellulaire ayant la forme de plaques planes ou de cylindres pleins, notamment de section circulaire, la traversée des corps, lors de l'emploi de plusieurs corps en céramique cellulaire, par les gaz d'échappement à épurer s'effectuant successivement et/ou simultanément.

6. Filtre selon l'une des revendications 1 à 4, caractérisé en ce que la céramique cellulaire a la configuration de cylindres creux ou de cylindres creux fermés unilatéralement et que les gaz d'échappement à épurer traversent la céramique cellulaire essentiellement radialement par rapport a l'axe des cylindres.

7. Filtre selon la revendication 5 ou 6, caractérisé en ce que la longueur de traversée de l'élément en céramique cellulaire par les gaz d'échappement est comprise entre 3 et 15 cm.

8. Filtre selon l'une des revendications 1 à 7, caractérisé en ce que le volume total de la céramique cellulaire correspond approximativement à la cylindrée du groupe Diesel-électogène dont les gaz d'échappement sont épurés.

9. Filtre selon l'une des revendications 1 à 8, caractérisé en ce que les gaz d'échappement à épurer franchissent d'abord les pores grossiers, puis les pores plus fins, de la céramique cellulaire, un élément en céramique cellulaire présentant des couches de pores grossiers et de pores fins ou au moins deux éléments en céramique cellulaires successifs à diamètres de pores différents étant utilisés.

10. Filtre selon l'une des revendications 1 à 9, caractérisé en ce que l'ensemble du système de pores est revêtu d'une substance à effet catalytique.

4